# EUROPÄISCHE PATENTANMELDUNG

(11) **EP 4 660 738 A1**
(43) Veröffentlichungstag der Anmeldung: **10.12.2025**
(21) Anmeldenummer: 25179807.0
(22) Anmeldetag: 30.05.2025
(51) Int. Cl.: G05D 1/661, G05D 105/28, G05D 109/10, B62D 15/02, G05D 1/644, G05D 107/70

(54) **VERFAHREN ZUM ANFAHREN EINER ZIELPOSITION DURCH EINEN AUTONOMEN MOBILEN ROBOTER UND AUTONOMER MOBILER ROBOTER**

(30) Priorität: 04.06.2024 DE 102024115448
(71) Anmelder: Jungheinrich AG, 22047 Hamburg (DE)
(72) Erfinder: LEIERSEDER, Thomas, 84095 Fürth (DE); RODER, Sebastian, 85356 Freising (DE); SKULIMOWSKI, Adrian, 84028 Landshut (DE); ULEWICZ, Sebastian, 85748 Garching b. München (DE); VON KROGH, Marco, 80997 München (DE); WILLEIT, Robert, 85368 Moosburg (DE); GANDHI, Kandarp, 85354 Freising (DE)
(74) Vertreter: Weickmann & Weickmann PartmbB

(57) **Zusammenfassung**

Die vorliegende Erfindung betrifft ein Verfahren zum Anfahren einer Zielposition (T) durch einen autonomen mobilen Roboter (10), wobei der autonome mobile Roboter (10) wenigstens ein ungelenktes Rad (14) und wenigstens ein gelenktes Rad (16) aufweist und in einem ersten Betriebsmodus in der Lage ist, sich in einer Betriebsumgebung autonom zu bewegen, das Verfahren umfassend die Schritte: Identifizieren einer idealen Startposition (S), von welcher davon ausgegangen wird, dass die Zielposition (T) mittels einer stationären Drehung erreichbar ist, und Anfahren der idealen Startposition (S); Erfassen der tatsächlichen Relativlage der tatsächlichen Zielposition (T) bezüglich des autonomen mobilen Roboters (10) mittels wenigstens einer Erfassungseinheit (22); auf Grundlage der Relativlage, Bestimmen einer nahezu-stationären Drehung, mittels welcher der autonome mobile Roboter (10) in der Lage ist, die Zielposition (T) von der idealen Startposition (S) aus zu erreichen; und Durchfahren der nahezu-stationären Drehung zu der Zielposition (T). Ferner betrifft die Erfindung einen autonomen mobilen Roboter (10), welcher in der Lage ist, ein derartiges Verfahren auszuführen.

## Beschreibung

Die vorliegende Erfindung betrifft ein Verfahren zum Anfahren einer Zielposition durch einen autonomen mobilen Roboter, wobei der autonome mobile Roboter wenigstens ein ungelenktes Rad und wenigstens ein gelenktes Rad aufweist und in einem ersten Betriebsmodus in der Lage ist, sich in einer Betriebsumgebung autonom zu bewegen, sowie einen autonomen mobilen Roboter, welcher in der Lage ist, in einem zweiten Betriebsmodus ein derartiges Verfahren auszuführen.

In jüngerer Zeit ist eine rasche Entwicklung im Logistiksektor zu einer erhöhten Automatisierung zu beobachten und die Zahl von Fahrzeugen, die in bestimmten Betriebsmodi anhand von Arbeitsaufträgen und über ihre Umgebung erfassten Daten in der Lage sind, autonome Bewegungen in Betriebsumgebungen durchzuführen, nimmt stetig zu. Auf dem Feld der als autonome mobile Roboter bezeichneten Fahrzeuge sind hierbei Ausführungsformen mit einer Kinematik bekannt, welche wenigstens ein ungelenktes Rad und wenigstens ein gelenktes Rad umfasst, insbesondere mit einer so genannten Dreiradkinematik mit zwei ungelenkten Rädern und einem gelenkten Antriebsrad.

Im konkreten Arbeitseinsatz derartiger Fahrzeuge können Szenarien auftreten, in welchen der entsprechende Roboter eine seitliche Anfahrt an eine Zielposition durchzuführen hat, beispielsweise bei einem seitwärtigen Anfahren (Ankoppeln) an eine bzw. Ausfahren aus einer Ladestation, sofern die entsprechende Lade-Schnittstelle an dem mobilen Roboter bezogen auf dessen Längsrichtung seitlich positioniert ist. Hierbei ist zu beachten, dass die Zielposition in einem entsprechenden Verfahren nicht nur durch ihre Lage im Raum gekennzeichnet sein kann, sondern ebenfalls durch ihre Orientierung, so dass je nach konkreter Aufgabenstellung auch von einer Zielpose gesprochen werden könnte.

Ganz allgemein sind vielfältige Anwendungsfälle denkbar, in welchen ein derartiges seitliches Anfahren einer Zielposition notwendig sein kann, beispielsweise bei räumlichen Einschränkungen in der Arbeitsumgebung des Fahrzeugs oder bei einem Bedienen spezieller Stationen wie Rollenbahnen, welche eine gerade Anfahrt erschweren oder verhindern. Um bei einem derartigen seitlichen Anfahren einer Zielposition Positionierungs- und Lokalisierungstoleranzen von Fahrzeug und Zielposition ausgleichen zu können, sind hierbei neue Ansätze notwendig, um die angestrebte Zielposition mit der gewünschten Genauigkeit erreichen zu können.

Ein Aspekt der zugrunde liegenden Aufgabenstellung besteht darin, dass derartige mobile autonome Roboter des eben beschriebenen Typs im Gegensatz zu beispielsweise autonomen mobilen Robotern mit einer omnidirektionalen Kinematik an sich nicht zu einer seitlichen Bewegung in der Lage sind, d.h. zu einer Bewegung in einer Richtung senkrecht zu ihrer Längsrichtung, sondern lediglich zu Drehungen mit vorgebbaren Drehwinkeln. Dies ist einer der Gründe dafür, weshalb derartige Fahrzeuge bisher auch nicht mit einer seitlich angeordneten Ladeschnittstelle versehen worden sind, wenngleich eine derartige Ausgestaltung eine minimale Bauweite des Fahrzeugs ermöglichen würde. Stattdessen haben autonome mobile Roboter mit Dreiradkinematik bisher in Geradeausfahrt an entsprechende Ladestationen angedockt, beispielsweise indem ihre Ladeschnittstellen an der Fahrzeugfront, der Fahrzeugoberseite oder unterhalb des Fahrzeugs angebracht waren.

Es kann jedoch aus den eben genannten Gründen gewünscht sein, eine Lade-Schnittstelle eines autonomen mobilen Roboters ohne die Fähigkeit zu einer omnidirektionalen Kinematik, welche stets komplexer und teurer als beispielsweise die bereits beschriebene einfache Dreiradkinematik ist, mit seitlich bündig angeordneten Lade-Schnittstellen auszustatten oder ihnen ganz allgemein das seitliche Anfahren einer Zielposition mit hoher Präzision zu ermöglichen. Wie ebenfalls bereits angesprochen, kann eine derartige seitlich bündige Anordnung der Lade-Schnittstelle beispielsweise gewünscht sein, um eine minimale Bauweite des entsprechenden Fahrzeugs zu ermöglichen oder um vielfältigere Positionierungen der Ladestation relativ zum Fahrzeug in der Betriebsumgebung zu erlauben.

Dementsprechend ist es eine Aufgabe der vorliegenden Erfindung, ein Verfahren zum Anfahren einer Zielposition durch einen autonomen mobilen Roboter der oben beschriebenen Bauart bereitzustellen, welche seitlich erfolgt und in einem vollautomatischen Betrieb des Roboters durchführbar ist. Insbesondere ergeben sich in dem bereits mehrfach angesprochenen Beispiel einer seitlich bündig platzierten Lade-Schnittstelle an dem autonomen mobilen Roboter aufgrund der engen Toleranzen derartiger Lade-Schnittstellen, der einfachen Kinematik des Roboters mit wenigstens einem ungelenkten und wenigstens einem gelenkten Rad und den Unsicherheiten aus Lokalisierung und Positionierung von Fahrzeug und Zielposition während des autonomen Betriebs besondere Randbedingungen, die einen neuen Ansatz zum präzisen Erreichen der Zielposition erfordern.

Zur Lösung dieser Aufgabe wird erfindungsgemäß ein Verfahren zum Anfahren einer Zielposition durch einen autonomen mobilen Roboter vorgeschlagen, wobei der autonome mobile Roboter wenigstens ein ungelenktes Rad und wenigstens ein gelenktes Rad aufweist und in einem ersten Betriebsmodus in der Lage ist, sich in einer Betriebsumgebung autonom zu bewegen, wobei das Verfahren die Schritte eines Identifizierens einer idealen Startposition, von welcher davon ausgegangen wird, dass die Zielposition mittels einer stationären Drehung erreichbar ist, und ein Anfahren der idealen Startposition, ein Erfassen der tatsächlichen Relativlage der Zielposition bezüglich des autonomen mobilen Roboters mittels wenigstens einer Erfassungseinheit, auf Grundlage der tatsächlichen Relativlage ein Bestimmen einer nahezu-stationären Drehung, mittels welcher der autonome mobile Roboter in der Lage ist, die Zielposition von der angefahrenen Startposition aus zu erreichen, und ein Durchfahren der nahezu-stationären Drehung zu der Zielposition umfasst.

Hierbei wird in dem erfindungsgemäßen Verfahren davon ausgegangen, dass der autonome mobile Roboter in der Lage ist, seine eigene Position in der fraglichen Betriebsumgebung zu bestimmen, beispielsweise anhand einer Selbst-Lokalisierung auf Grundlage von einer Erfassung seiner Umgebung und einem Abgleich mit zur Verfügung stehenden Informationen über die Betriebsumgebung oder mittels in der Betriebsumgebung installierten Transmittern oder Ähnlichem, und ferner über eine Online- oder Offlinekarte verfügt, in welcher die im Rahmen des Verfahrens anzufahrende Zielposition hinterlegt ist. Alternativ ist es ebenfalls denkbar, dass der mobile Roboter über keine Karte seiner Umgebung verfügt, sondern sich rein relativ und anhand durch Sensorik erkennbaren Strukturen bewegt.

Hierbei kann die Anweisung zum Anfahren der Zielposition beispielsweise extern von einer Leitstelle an den Roboter übermittelt werden, insbesondere im Rahmen eines Arbeitsauftrags, oder der Roboter kann in einem autonomen Betrieb eine Anfahrt der Zielposition planen, beispielsweise wenn es sich um eine Ladestation handelt und der verbleibende Ladezustand des Roboters unter einen vorgegebenen Schwellenwert abgefallen ist.

Auf Grundlage der Bestimmung der eigenen Position sowie der Kenntnis der Zielposition in der Betriebsumgebung kann nun im Rahmen des erfindungsgemäßen Verfahrens zunächst einmal die ideale Startposition identifiziert werden, wobei hierzu von der in der Umgebung bekannten Lage der Zielposition und der Kenntnis der eigenen Position sowie der Fahrgeometrie des autonomen mobilen Roboters ausgegangen wird.

Hierbei ist jedoch damit zu rechnen, dass die Selbst-Lokalisierung des Roboters stets eine gewisse Toleranz oder Unsicherheit aufweisen wird und letztlich auch nicht garantiert werden kann, dass die ggf. zur Verfügung stehende Karte mit der darin enthaltenen Zielposition zu jedem Zeitpunkt absolut präzise und frei von entsprechenden Abweichungen zu den tatsächlichen Verhältnissen in der Betriebsumgebung ist. Somit wird im Rahmen der vorliegenden Erfindung davon ausgegangen, dass sich die angefahrene Startposition von der idealen Startposition unterscheiden wird und von der angefahrenen Startposition aus mittels einer stationären Drehung die Zielposition nicht unbedingt mit der gewünschten Präzision erreichbar ist, sodass eine gewisse Abweichung von einer perfekt stationären Drehung zu berücksichtigen sein wird.

Hierbei sei an dieser Stelle ferner darauf hingewiesen, dass der Begriff der stationären Drehung derart zu verstehen ist, dass während eines entsprechenden Vorgangs von dem autonomen mobilen Roboter ein Lenkwinkel von genau 90° eingeschlagen wird, was zu einer Drehung um ein von der bekannten Gesamtgeometrie des Roboters abhängiges stationäres Drehzentrum führen wird, während die nahezu-stationäre Drehung einen hiervon in einem gewissen Maß abweichenden Lenkwinkel erlaubt und ferner die zu durchfahrende nahezu-stationäre Drehung durch den von dem Roboter einzuschlagenden Lenkwinkel und den zu überfahrenden Drehwinkel definiert ist. Beim Durchfahren einer derartigen nahezu-stationären Drehung wird sich das Drehzentrum des Roboters folglich in einem gewissen Bereich innerhalb der Betriebsumgebung bewegen.

Hierbei kann im Rahmen des erfindungsgemäßen Verfahrens das Erfassen der tatsächlichen Relativlage der Zielposition bezüglich des autonomen mobilen Roboters beispielsweise nach Erreichen der angefahrenen Startposition durchgeführt werden, sodass zunächst einmal die Anfahrt dieser Startposition abgeschlossen wird und erst hiernach mittels der wenigstens einen Erfassungseinheit die Zielposition zur Bestimmung der Relativlage in der Umgebung des Roboters erfasst wird bzw. von der Erfassungseinheit gelieferte Daten hinsichtlich der tatsächlichen Relativlage der Zielposition ausgewertet werden. Alternativ wäre es selbstverständlich ebenfalls denkbar, das Erfassen der Relativlage der Zielposition bereits während des Anfahrens der idealen Startposition zu bestimmen, beispielsweise sobald eine Auswertung der von der Erfassungseinheit gelieferten Daten ergibt, dass die Zielposition bereits im Erfassungsbereich der Erfassungseinheit liegt und somit eine Bestimmung der Relativlage möglich ist, oder wenn ein entsprechender Rückschluss bereits aus den bekannten Parametern der Anfahrt der idealen Startposition möglich ist. In diesem Fall könnte ferner eine neue Startposition entsprechend der erfassten Zielposition dynamisch neu berechnet werden, um die Anfahrt davon präziser, schneller und robuster zu gestalten. Ferner ist denkbar, die Erfassung zu beginnen, sobald ein vorbestimmter Abstand zu der Zielposition unterschritten worden ist.

Hierdurch könnte gegebenenfalls eine Beschleunigung des erfindungsgemäßen Verfahrens erfolgen, es wäre jedoch gleichzeitig mit einem erhöhten Verarbeitungsaufwand zu rechnen, da im Gegensatz zur entsprechenden Erfassung während der Anfahrt nach Erreichen der angefahrenen Startposition die Zielposition bereits in einem relativ eng umrissenen räumlichen Bereich vorliegen müsste, sofern bei der Selbst-Lokalisierung des Roboters und dem Auslesen der ggf. vorliegenden Umgebungskarte hinsichtlich der angenommenen Zielposition keine übermäßig großen Abweichungen auftreten.

In diesem Zusammenhang ist es ebenfalls denkbar, dass das erfindungsgemäße Verfahren ferner ein Überprüfen der erfassten tatsächlichen Relativlage hinsichtlich wenigstens eines vorbestimmten Kriteriums und/oder ein Bestimmen eines gemessenen Startpunkts auf Grundlage der erfassten Relativlage umfasst, von welchem aus die Zielposition mittels einer stationären Drehung erreichbar wäre. Demzufolge könnten an dieser Stelle Zustände abgefangen werden, in welchen beispielsweise eine räumliche oder winkelbasierte Abweichung zwischen der erwarteten und der erfassten Relativlage zwischen der angefahrenen Startposition und der Zielposition derart groß sind, dass davon ausgegangen werden muss, dass ein schwerwiegender Fehler in der Gesamtsystematik vorliegt, beispielsweise in der Lokalisierung des Roboters oder den ggf. dem Roboter zur Verfügung stehenden Kartendaten hinsichtlich der Lage der Zielposition in der Betriebsumgebung. In einem solchen Fall könnte dementsprechend das Verfahren zu diesem Zeitpunkt abgebrochen werden und beispielsweise eine Warnung an einen menschlichen Bediener ausgegeben werden, woraufhin eine Überprüfung der aufgefundenen Problematik durchgeführt werden könnte. Beispiele für derartige vorbestimmte Kriterien könnten eine maximal zulässige Abweichung der erfassten Relativlage zu der bestimmten Relativlage bzw. des idealen Startpunkts zu dem angefahrenen Startpunkt in kartesischen Koordinaten sein oder auch eine Bestimmung, ob die Planung einer nahezu-stationären Drehung von der angefahrenen Startposition zu der erfassten Zielposition anhand der hierzu zu verwendenden Algorithmen möglich ist.

Hierbei könnte beispielsweise vorausgesetzt werden, dass die nahezu-stationäre Drehung einer Drehung mit einem Lenkwinkel von zwischen 80° und 100° entspricht, wobei jedoch prinzipiell auch andere Definitionen einer nahezu-stationären Drehung denkbar wären und insbesondere auch ein asymmetrischer Winkel-Wertebereich um 90° herum zugrunde gelegt werden könnte, beispielsweise abhängig vom genauen Bautyp und der sich daraus ableitenden Kinematik des autonomen mobilen Roboters.

Wenngleich ferner zunächst einmal keine Einschränkungen hinsichtlich der zum Bestimmen der nahezu-stationären Drehung verwendeten Techniken und Algorithmen bestehen, so kann in einer besonders effizienten Ausführungsform die Bestimmung der nahezu-stationären Drehung mittels nichtlinearer Optimierung durchgeführt werden, wobei vorzugsweise eine Lösung für die nahezu-stationäre Drehung offline vorberechnet und online interpoliert werden können. In einem derartigen Beispiel können die entsprechenden Lösungs-Tupel, bestehend aus Lenkwinkel und Drehwinkel, unter Verwendung eines nichtlinearen Lösungsansatzes bestimmt werden, dessen Eingabe ein Tupel aus einer Abweichung in kartesischen Koordinaten und dem Drehwinkel zwischen der Ausgangsposition und der zu erreichenden Position ist. Hierbei wird das entsprechende Optimierungsproblem unter Verwendung der relativen Transformationen zwischen dem Fahrzeugkörper und den Grenzen der Zielposition definiert. Die entsprechenden Lösungen können ebenfalls nachverarbeitet werden, beispielsweise dahingehend überprüft werden, ob vorbestimmte Bedingungen hinsichtlich der Präzision der Anfahrt erfüllt sind, und valide Lösungen werden einem Tensor angehängt, welcher online verwendet wird, um eine lineare Interpolation auszuführen.

Nachdem der autonome mobile Roboter anschließend an der letztlich erreichten Zielposition den dort auszuführenden Arbeitsablauf vollendet hat, also beispielsweise ein Ladevorgang abgeschlossen worden ist, sofern die Zielposition einer Ladestation entspricht, kann das erfindungsgemäße Verfahren ferner ein anschließendes Verlassen der Zielposition mittels einer stationären Drehung umfassen, das heißt einer Drehung mit einem Lenkwinkel von im Wesentlichen 90°.

Wie bereits weiter oben mehrfach angedeutet, kann die Zielposition insbesondere einer Ladestation für den autonomen mobilen Roboter entsprechen, wobei in einem solchen Fall die Erfassung der Ladestation durch die wenigstens eine Erfassungseinheit in der üblichen Weise über eine Mustererkennung in den von der wenigstens einen Erfassungseinheit gelieferten Daten erfolgen kann und neben der reinen Lage der Ladestation im Raum auch ihre Orientierung zu erfassen ist, um ein sicheres Ankoppeln zu ermöglichen. Derartige Ladestationen weisen insbesondere eine bauartbedingte Ankopplungstoleranz in kartesischen Koordinaten und einem Winkel auf, welche dementsprechend die bei der Anfahrt einzuhaltende Präzision vorgibt. Dementsprechend kann das erfindungsgemäße Verfahren ferner im Rahmen des Anfahrens der Zielposition eine Kontaktierung der Ladekontakte von Ladestation und mobilem Roboter während der nahezu-stationären Drehung umfassen.

Gemäß einem zweiten Aspekt betrifft die vorliegende Erfindung einen autonomen mobilen Roboter, umfassend einem Fahrzeugkörper, wenigstens ein ungelenktes Rad und wenigstens ein gelenktes Rad, und eine Steuereinheit, welche dazu eingerichtet ist, in einem ersten Betriebsmodus eine autonome Bewegung in einer Betriebsumgebung zu steuern und in einem zweiten Betriebsmodus das oben beschriebene Verfahren gemäß der vorliegenden Erfindung auszuführen. Hierbei kann die angesprochene Steuereinheit beispielsweise mit einer ohnehin vorhandenen zentralen Steuereinheit derartiger autonomer mobiler Roboter integriert oder gekoppelt sein und in an sich bekannter Weise eine Verarbeitungseinheit, wie beispielsweise einen Mikroprozessor, sowie eine diesem zugeordnete Speichereinheit umfassen, auf welcher Steuerungssoftware sowie gegebenenfalls Kartendaten und/oder weitere Programme und Daten hinterlegt sein können.

Weiterhin kann der autonome mobile Roboter gemäß der vorliegenden Erfindung direkt wenigstens eine betriebsmäßig mit der Steuereinheit gekoppelte Erfassungseinheit zum Erfassen der Relativlage der Zielposition bezüglich des autonomen mobilen Roboters umfassen, wobei prinzipiell auch denkbar wäre, die Erfassungseinheit beispielsweise in Form eines Kamerasystems mit geeigneten Bilderkennungsfähigkeiten extern zu dem mobilen Roboter anzuordnen und entsprechende Daten über die Relativlage zwischen dem Roboter und der Zielposition über eine drahtlose Datenverbindung an den Roboter zu liefern, um auf dieser Grundlage das erfindungsgemäße Verfahren durchzuführen. Sofern die wenigstens eine Erfassungseinheit direkt dem Roboter zugeordnet ist, kann es sich hierbei beispielsweise um an sich bekannte Bautypen handeln, wie beispielsweise Laserscanner, welche bereits in zahlreichen Typen von autonomen mobilen Robotern zur Erfassung der Umgebung für die Orientierung und Lokalisierung des Roboters sowie für deren Sicherheitsfunktionen eingesetzt werden.

Wie bereits oben angedeutet, kann der erfindungsgemäße autonome mobile Roboter insbesondere in einer Dreirad-Konfiguration mit zwei ungelenkten und nichtangetriebenen Rädern, sogenannten Lasträdern, und einem gelenkten und angetriebenen Rad vorliegen, wobei das gelenkte und angetriebene Rad insbesondere zu einer Bewegung über volle 360° eingerichtet sein kann, um entsprechende Lenkvorgänge des Roboters bewirken zu können. Autonome mobile Roboter mit derartigem Aufbau und einer derartigen Kinematik sind aus dem Stand der Technik bereits bekannt und haben sich als kostengünstig und effizient erwiesen.

Wie bereits ebenfalls oben angedeutet, kann der erfindungsgemäße autonome mobile Roboter ferner eine Lade-Schnittstelle für ein Ankoppeln an eine externe Ladestation umfassen, welche an einer Seite des Fahrzeugkörpers bezüglich dessen Längsrichtung angeordnet ist, wobei die Lade-Schnittstelle insbesondere derart eingerichtet sein kann, dass sie in einer Draufsicht auf den autonomen mobilen Roboter bündig mit dem Umriss des Fahrzeugkörpers ausgerichtet ist. Hierdurch wird die Baubreite des Roboters in seitlicher Richtung gegenüber Ausführungsformen verringert, in welchen die Lade-Schnittstelle seitlich übersteht, sodass die Flexibilität des Roboters hinsichtlich eines Befahrens von schmalen Durchgängen verbessert wird und insgesamt der Formfaktor des Roboters verringert wird.

Zuletzt betrifft die vorliegende Erfindung ein System, gebildet aus einem autonomen mobilen Roboter der eben beschriebenen Art sowie einer externen Ladestation, welche ein seitliches Anfahren und Ankoppeln mittels der Lade-Schnittstelle des autonomen mobilen Roboters erlaubt. Eine derartige Station weist üblicherweise die oben bereits angesprochenen typische Kopplungstoleranzen auf, wobei durch das Ausführen des oben beschriebenen erfindungsgemäßen Verfahrens erlaubt wird, ein Ankoppeln an die Ladestation stets mit ausreichend hoher Präzision zum Einhalten dieser Kopplungstoleranzen durchzuführen.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figur 1: einen erfindungsgemäßen autonomen mobilen Roboter während eines Durchführens eines ersten Schritts eines erfindungsgemäßen Verfahrens;
- Figur 2: eine schematische Darstellung einer stationären Drehung des Roboters aus Figur 1;
- Figur 3: zwei Varianten von nahezu-stationären Drehungen des Roboters aus den Figuren 1 und 2;
- Figur 4: eine schematische Darstellung eines Verlassens der Zielposition des Roboters aus den Figuren 1 - 3; und
- Figur 5: ein Flussdiagramm zur Erläuterung des erfindungsgemäßen Verfahrens.

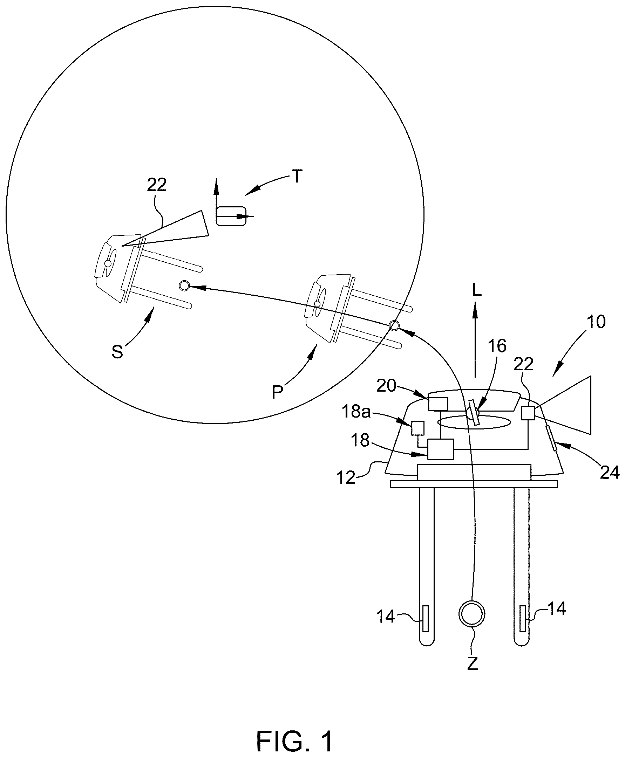

In Figur 1 ist zunächst ein autonomer mobiler Roboter in einer vergrößerten schematischen Draufsicht gezeigt, während er mit dem Durchführen eines erfindungsgemäßen Verfahrens beginnt, das anhand kleinerer Darstellungen davon illustriert ist. Hierbei ist der Roboter mit dem Bezugszeichen 10 bezeichnet und mit einem Fahrzeugkörper 12 mit einer Längsrichtung L, zwei ungelenkten Rädern 14 und einem gelenkten sowie angetriebenem Rad 16 dargestellt, welches im Bereich des Fahrzeugkörpers 12 an der Unterseite davon angeordnet ist. Hierbei ist das angetriebene Rad 16 antriebsseitig an dem mobilen Roboter 10 angeordnet, während die ungelenkten und nicht angetriebenen Räder 14 im Bereich des vorderen Endes von Gabelzinken angeordnet sind. Bei den ungelenkten Rädern 14 kann es sich insbesondere um Lastrollen handeln.

Ferner umfasst der Roboter 10 eine lediglich schematisch angedeutete Steuereinheit 18 mit einem Speicher 18a, welcher betriebsmäßig einerseits mit einer Kommunikationseinheit 20 beispielsweise zum Empfangen von Arbeitsaufträgen und Information über die Umgebung des Roboters 10, und andererseits mit einer Erfassungseinheit 22 gekoppelt ist. Hierbei ist in der Darstellung aus Figur 1 zu erkennen, dass die Erfassungseinheit 22 die Umgebung des Roboters 10 abtastet, wobei hierzu beispielsweise ein an sich bekannter Laserscanner zum Einsatz kommen kann.

Der Betriebsablauf aus Figur 1 stellt sich nun derart da, dass der mobile Roboter 10 eine Zielposition T mittels einer seitlichen Bewegung anfahren soll, d.h. einer Bewegung, welche einer Drehung um sein geometrisches Drehzentrum Z entspricht, welches durch die Anordnung der ungelenkten Räder 14 und des gelenkten Rads 16 bezüglich des Fahrzeugkörpers 12 vorgegeben ist.

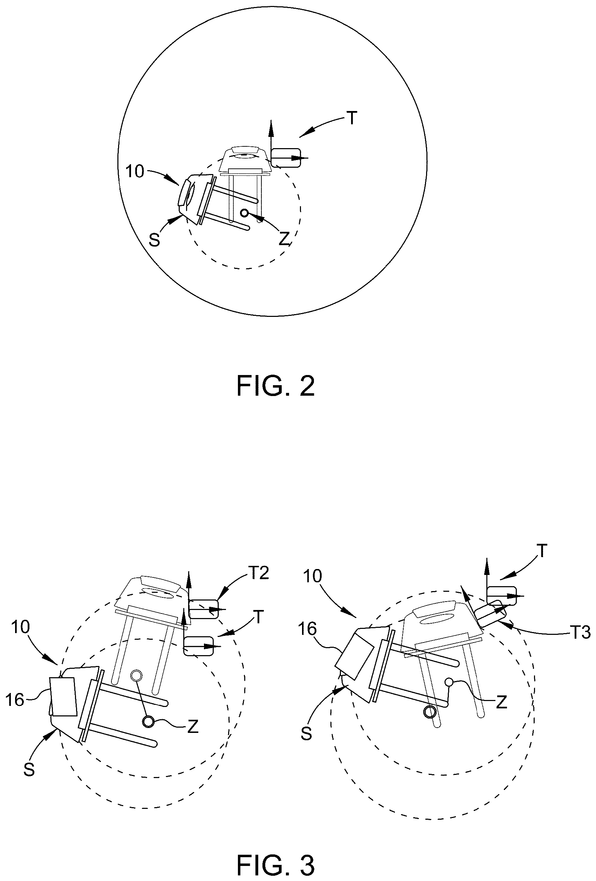

Hierzu stehen dem Roboter 10 zum einen Lokalisierungsinformationen über seine eigene Position innerhalb seiner Betriebsumgebung, welche beispielsweise ebenfalls aus den von der Erfassungseinheit 22 ausgegebenen Daten oder mittels einer dedizierten Lokalisierungseinheit bestimmt werden, sowie ggf. eine Karte der Betriebsumgebung zur Verfügung, in welcher die Zielposition T hinterlegt ist. Da die Anfahrt der Zielposition T folglich aus einer bestimmten Richtung zu erfolgen hat und neben der reinen Lage davon im Raum auch ihre Orientierung zu beachten ist, ist die Zielposition T durch zwei Pfeile dargestellt, wobei aus den Figuren 2 und 3 deutlich wird, dass die Anfahrt des Roboters 10 an die Zielposition T derart zu erfolgen hat, dass eine seitliche Anfahrt davon angestrebt wird.

Auf Grundlage der dem Roboter 10 zur Verfügung stehenden Lokalisierungsdaten sowie der aus der Umgebungskarte bekannten Zielposition T ist es ihm möglich, eine ideale Startposition für eine stationäre Drehung zu der Zielposition T zu identifizieren, welche in Figur 1 mit S bezeichnet und durch die entsprechende Positionierung des Roboters 10 dargestellt ist. Die ideale Startposition S wird im Rahmen des erfindungsgemäßen Verfahrens in geeigneter Weise in einem entsprechenden Betriebsmodus autonom durch den Roboter 10 angefahren, wie in Figur 1 ebenfalls durch entsprechende Pfeile verdeutlicht ist. Hierbei ist in dieser Figur 1 ferner eine zusätzliche Zwischenposition P in ähnlicher Weise wie die ideale Startposition S dargestellt, welche sich dadurch auszeichnet, dass ab dem Durchfahren dieser Zwischenposition P die Erfassung der Umgebung des Roboters 10 hinsichtlich der Zielposition T begonnen wird, da ein vorgegebener Abstand des Roboters 10 dazu unterschritten worden ist.

Im hier diskutierten Beispiel entspricht die Zielposition T einer seitlich anzufahrenden Ladestation für den mobilen Roboter 10, an welche dieser mit einer seitlich an seinem Fahrzeugkörper 12 und bündig mit dem Umriss davon angeordneten Lade-Schnittstelle 24 ankoppeln kann, sodass ein entsprechender Betriebsvorgang beispielsweise dann begonnen werden kann, wenn der Roboter 10 feststellt, dass sein interner Energiespeicher einen kritischen minimalen Ladezustand unterschritten hat und demzufolge ein Aufladevorgang notwendig werden wird.

Anhand von Figur 2 wird ferner verdeutlicht, wie der Roboter 10 ausgehend von der idealen Startposition S mittels einer stationären Drehung, das heißt einer Drehung mit einem Lenkwinkel von 90° um sein Drehzentrum Z, die Zielposition T erreichen könnte. Durch diese stationäre Drehung wird das oben angesprochene tangentiale Anfahren der Zielposition T ermöglicht, wobei sich jedoch unter realen Bedingungen bei einer Auswertung der durch die Erfassungseinheit 22 erfassten Relativlage der Zielposition T bezüglich der idealen Startposition S herausstellen wird, dass aufgrund von Toleranzen und Unsicherheiten die tatsächliche Relativlage der Zielposition T bezüglich des autonomen mobilen Roboters 10 von der ideal angenommenen Relativlage abweichen wird, da die ideale Startposition S in der Regel nicht mit ausreichender Genauigkeit angefahren werden wird sondern eine angefahrene Startposition erreicht wird und unter Umständen auch die Zielposition T nicht exakt an dem von den ggf. vorliegenden Kartendaten vorausgesagten Ort liegt. Weitere Ungenauigkeiten können sich während das Anfahrvorgangs ergeben, wenn beispielsweise der Untergrund geneigt ist oder Unebenheiten bzw. unterschiedliche Beschaffenheiten aufweist.

Um diese Abweichung nun auszugleichen und eine Anfahrt der Zielposition T mit der gewünschten Präzision bewerkstelligen zu können, wird in dem erfindungsgemäßen Verfahren, wie in Figur 3 angedeutet, von der zunächst vorausgesetzten stationären Drehung abgewichen werden und auf eine nahezu-stationäre Drehung zurückgegriffen.

Hierbei sind in Figur 3 zwei Beispiele dargestellt, in welchen aus Sicht des Roboters 10 auf Grundlage der erfassten tatsächlichen Relativlage entsprechende reale Zielpositionen T2 und T3 jeweils von der angenommenen Zielposition T abweichen und dementsprechend die Relativlage zwischen der angefahrenen Startposition S und den realen Zielposition dargestellt ist. Hierbei beziehen sich die tatsächlichen Zielpositionen T2 und T3 jeweils auf die ermittelten Relativlagen zu der idealen Startposition S beziehungsweise der tatsächlichen Position des mobilen Roboters 10 und können einerseits einen räumlichen Versatz und andererseits eine Winkelabweichung von der zunächst angenommenen Zielposition T aufweisen.

In beiden Fällen, die in Figur 3 dargestellt sind, ergibt sich nun jeweils ausgehend von der durch den Roboter 10 angefahrenen Startposition S eine zu durchfahrende, von einer stationären Drehung abweichende Bahnkurve, welche notwendig ist, um die jeweilige erfasste Zielposition T2 bzw. T3 präzise zu erreichen. Hierzu wird erfindungsgemäß auf nahezu-stationäre Drehungen zurückgegriffen, welche beispielsweise einen Lenkwinkel von zwischen 80° und 100° aufweisen können und durch den Lenkwinkel des gelenkten Rads 16 sowie den zu durchfahrenden Drehwinkel definiert sind. Beim Durchfahren einer derartigen nahezu-stationären Drehung wird dementsprechend eine Verlagerung des Drehzentrums Z des Roboters 10 festzustellen sein, wie in Figur 3 jeweils angedeutet ist. Die Bestimmungen der entsprechenden nahezu-stationären Drehungen werden in der Steuereinheit 18 des Roboters 10 mittels nichtlinearer Optimierung durchgeführt, wobei insbesondere Lösungen derartiger nahezu-stationäre Lösungen offline vorberechnet worden sind und online interpoliert werden, um sämtliche denkbaren Fälle von Relativlagen in effizienter Weise abdecken zu können.

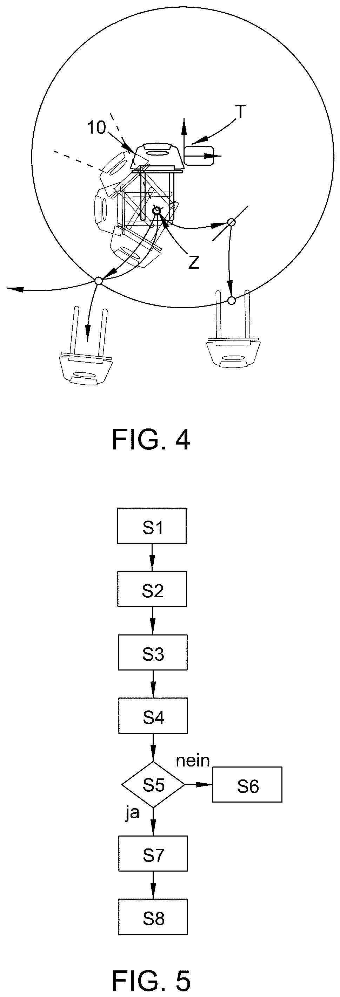

Nachdem der Roboter 10 gemäß der Figur 3 die jeweilige Zielposition T2 bzw. T3 nach dem Durchfahren der ermittelten nahezu-stationären Drehung erreicht hat und dort seinen entsprechenden Arbeitsauftrag erfüllt hat, also beispielsweise in einer Ladestation auf einen gewünschten Ladezustand aufgeladen worden ist, kann er die entsprechende Zielposition wieder verlassen, wie in Figur 4 dargestellt. Hierbei kann zum Verlassen der Zielposition in jedem Fall auf eine stationäre Drehung zurückgegriffen werden und diese kann über einen derartigen Winkelbereich ausgeführt werden, dass der Roboter 10 wie in Figur 4 durch mehrere alternative Pfeile angedeutet in geeigneter Weise anschließend weiterfahren kann, beispielsweise um in der Umgebung davon vorliegenden Hindernissen auszuweichen oder unmittelbar auf eine Bahnkurve für einen neuen Arbeitsauftrag einzubiegen.

Unter Bezugnahme auf das Flussdiagramm aus Figur 5 soll zuletzt der prinzipielle Ablauf des erfindungsgemäßen Verfahrens erläutert sein, wobei dieses zunächst einmal in S1 damit beginnt, dass der autonome mobile Roboter 10 feststellt, dass eine vorgegebene Zielposition T anzufahren ist, beispielsweise im Rahmen eines von einer externen Leitstelle übermittelten Arbeitsauftrags oder da eine Ladestation aufgrund eines kritischen Ladezustands des Roboters 10 anzufahren ist.

In Schritt S2 wird anschließend auf Grundlage der dem Roboter 10 zur Verfügung stehenden Lokalisierungsdaten sowie der bekannten Zielposition T die oben beschriebene ideale Startposition S identifiziert, von welcher der Roboter 10 davon ausgeht, dass von ihr aus die Zielposition T mittels einer stationären Drehung erreicht werden kann, wobei er anschließend in Schritt S3 die ideale Startposition S anfahren wird, jedoch aufgrund der angesprochenen Fehlerquellen eine angefahrene Startposition erreichen wird.

Während dieses Anfahrens oder nach Erreichen der angefahrenen Startposition S wird in Schritt S4 mittels der wenigstens einen Erfassungseinheit 22 die Zielposition T und insbesondere ihre Relativlage bezüglich des Robotes 10 erfasst, wobei anschließend in Schritt S5 ein Überprüfen der erfassten Relativlage hinsichtlich wenigstens eines vorbestimmten Kriteriums durchgeführt wird oder ein gemessener Startpunkt auf Grundlage der erfassten Relativlage bestimmt wird, von welchem aus die Zielposition mittels einer stationären Drehung erreichbar wäre, welcher ebenfalls für eine Überprüfung der Plausibilität der in dem Verfahren ermittelten Daten herangezogen werden kann.

Sollte sich hierbei in Schritt S5 herausstellen, dass das wenigstens eine vorbestimmte Kriterium nicht erfüllt ist ("nein" in Schritt S5), so wird das Verfahren bei Schritt S6 abgebrochen und beispielsweis eine Warnung an einen menschlichen Bediener ausgegeben, während der Roboter 10 vorläufig stillgelegt wird. Alternativ könne an dieser Stelle beispielsweise auch ein automatischer erneuter Versuch durchgeführt werden, also zu einer Art "Vorposition" zu fahren und die Schritte S1 bis S5 erneut durchzuführen.

Dem hingegen wird bei Schritt S7, sofern festgestellt worden ist, dass das wenigstens eine vorbestimmte Kriterium erfüllt ist ("ja" in Schritt S5), auf Grundlage der ermittelten Relativlage beispielsweise mittels nichtlinearer Optimierung eine nahezu-stationäre Drehung bestimmt, welche durch einen in einem vorbestimmten Bereich liegenden Lenkwinkel sowie einen zu überstreichenden Drehwinkel des Roboters 10 gekennzeichnet ist.

Anschließend wird bei Schritt S8 die derart bestimmte nahezu-stationäre Drehung zu der Zielposition T durchfahren, welche nach Abschluss der an der Zielposition durchzuführenden Arbeitsabläufe bei Schritt S9 wieder verlassen werden kann, insbesondere durch eine stationäre Drehung.

## Patentansprüche

1. Verfahren zum Anfahren einer Zielposition (T) durch einen autonomen mobilen Roboter (10),
wobei der autonome mobile Roboter (10) wenigstens ein ungelenktes Rad (14) und wenigstens ein gelenktes Rad (16) aufweist und in einem ersten Betriebsmodus in der Lage ist, sich in einer Betriebsumgebung autonom zu bewegen,
das Verfahren umfassend die Schritte:
- (S2) Identifizieren einer idealen Startposition (S), von welcher davon ausgegangen wird, dass die Zielposition (T) mittels einer stationären Drehung erreichbar ist, und (S3) Anfahren der idealen Startposition (S);
- (S4) Erfassen der tatsächlichen Relativlage der tatsächlichen Zielposition (T) bezüglich des autonomen mobilen Roboters (10) mittels wenigstens einer Erfassungseinheit (22);
- auf Grundlage der Relativlage, (S7) Bestimmen einer nahezu-stationären Drehung, mittels welcher der autonome mobile Roboter (10) in der Lage ist, die Zielposition (T) von der angefahrenen Startposition (S) aus zu erreichen; und
- (S8) Durchfahren der nahezu-stationären Drehung zu der Zielposition (T).

2. Verfahren nach Anspruch 1,
wobei das Erfassen der tatsächlichen Relativlage der Zielposition (T) bezüglich des autonomen mobilen Roboters (10) nach Erreichen der angefahrenen Startposition (S) durchgeführt wird.

3. Verfahren nach einem der vorhergehenden Ansprüche,
wobei das Erfassen der tatsächlichen Relativlage der Zielposition (T) bezüglich des autonomen mobilen Roboters (10) während des Anfahrens der idealen Startposition (S) durchgeführt wird, insbesondere sobald ein vorbestimmter Abstand zu der Zielposition (T) unterschritten worden ist.

4. Verfahren nach einem der vorhergehenden Ansprüche,
ferner umfassend ein Überprüfen der erfassten tatsächlichen Relativlage hinsichtlich wenigstens eines vorbestimmten Kriteriums und/oder ein Bestimmen eines gemessenen Startpunkts auf Grundlage der erfassten Relativlage, von welchem aus die Zielposition (T) mittels einer stationären Drehung erreichbar wäre.

5. Verfahren nach einem der vorhergehenden Ansprüche,
wobei die nahezu-stationäre Drehung einer Drehung mit einem Lenkwinkel von zwischen 80° und 100° entspricht.

6. Verfahren nach einem der vorhergehenden Ansprüche,
wobei die Bestimmung der nahezu-stationären Drehung mittels nichtlinearer Optimierung durchgeführt wird, wobei vorzugsweise Lösungen für nahezu-stationäre Drehungen offline vorberechnet und online interpoliert werden.

7. Verfahren nach einem der vorhergehenden Ansprüche,
ferner umfassend ein anschließendes Verlassen der Zielposition (T) mittels einer stationären Drehung.

8. Verfahren nach einem der vorhergehenden Ansprüche,
wobei die Zielposition (T) einer Ladestation für den autonomen mobilen Roboter (10) entspricht.

9. Verfahren nach Anspruch 8,
wobei das Anfahren der Zielposition (T) ebenfalls die Kontaktierung von Ladekontakten der Ladestation und des mobilen Roboters (10) während der nahezu-stationären Drehung umfasst

10. Autonomer mobiler Roboter (10), umfassend:
- einen Fahrzeugkörper (12);
- wenigstens ein ungelenktes Rad (14) und wenigstens ein gelenktes Rad (16); und
- eine Steuereinheit (18), welche dazu eingerichtet ist, in einem ersten Betriebsmodus eine autonome Bewegung in einer Betriebsumgebung zu steuern und in einem zweiten Betriebsmodus das Verfahren nach einem der vorhergehenden Ansprüche auszuführen.

11. Autonomer mobiler Roboter (10) nach dem vorhergehenden Anspruch, ferner umfassend wenigstens eine betriebsmäßig mit der Steuereinheit (18) gekoppelte Erfassungseinheit (11) zum Erfassen der Relativlage der Zielposition (T) bezüglich des autonomen mobilen Roboters (10).

12. Autonomer mobiler Roboter (10) nach einem der Ansprüche 10 und 11, welcher eine Dreirad-Konfiguration mit zwei ungelenkten und nicht-angetriebenen Rädern (14) und einem gelenkten und angetriebenen Rad (16) aufweist, wobei das gelenkte und angetriebene Rad (16) vorzugsweise zu einer Schwenkbewegung über volle 360° eingerichtet ist.

13. Autonomer mobiler Roboter (10) nach einem der Ansprüche 10 bis 12, ferner umfassend eine Lade-Schnittstelle (24) für ein Ankoppeln an eine externe Ladestation, welche an einer Seite des Fahrzeugkörpers (12) bezüglich dessen Längsrichtung (L) angeordnet ist.

14. Autonomer mobiler Roboter nach Anspruch 13,
wobei die Lade-Schnittstelle (24) derart eingerichtet ist, dass sie in einer Draufsicht auf den autonomen mobilen Roboter (10) bündig mit dem Umriss des Fahrzeugkörpers (12) ausgerichtet ist.

15. System, gebildet aus einem autonomen mobilen Roboter nach einem der Ansprüche 13 und 14 und einer externen Ladestation, welche ein seitliches Anfahren und Ankoppeln mittels der Lade-Schnittstelle (24) des autonomen mobilen Roboters (10) erlaubt.
